# EUROPEAN PATENT APPLICATION

(11) **EP 4 811 581 A1**
(43) Date of publication of application: **23.09.2026**
(21) Application number: 25164398.7
(22) Date of filing: 18.03.2025
(51) Int. Cl.: H02J 3/00, H02J 3/38, H02J 13/00, H02J 3/18

(54) **CONTROL METHOD, OPTIMIZATION MODULE AND POWER PLANT**

(71) Applicant: Hitachi Energy Ltd, 8050 Zürich (CH)
(72) Inventor: BOLZONI, Alberto, 5408 Ennetbaden (CH); BERGGREN, Bertil, 722 10 Västerås (SE); HUANG, Xing, Beijing, 100024 (CN); KIRIHARA, Kenta, 722 12 Västerås (SE); LARSSON, Mats, 5102 Rupperswil (CH); TAYYEBI, Ali, 723 59 Västerås (SE)
(74) Representative: Epping - Hermann - Fischer

(57) **Abstract**

In an embodiment, the method controls a power plant (1) on line, the power plant (1) has a control device (15), the method comprises:
- monitoring a dynamic state representation (3) and an actual setting of the control device (15),
- simulating, by using a digital model (21) of the power plant (1), an evolution of an operating state of the power plant (1) using a dynamic state representation (3) and the actual setting, and
when a criticality of the operating state is predicted by the simulating:
- creating varied settings of the control device (15) and simulating further evolutions of the operating state using the varied settings and the dynamic state representation (3),
- selecting a future setting from the varied settings, with the future setting avoidance of the criticality is predicted, and
- controlling the power plant (1) using the future setting.

## Description

A control method for a power plant is provided. Moreover, an optimization module for carrying out the control method and a power plant are provided. In addition, a computer program for carrying out the control method is also provided.

Documents D. Yang et al., "Unified Modular State-Space Modeling of Grid-Connected Voltage-Source Converters" in IEEE Transactions on Power Electronics, Vol. 35, No. 9, pages 9700 to 9715, Sept. 2020, doi: 10.1109/TPEL.2020.2965941, and Y. Wang et al., "Harmonic Instability Assessment Using State-Space Modeling and Participation Analysis in Inverter-Fed Power Systems" in IEEE Transactions on Industrial Electronics, Vol. 64, No. 1, pages 806 to 816, Jan. 2017, doi: 10.1109/TIE.2016.2588458, as well as X. Yue et al., "Review of Small-Signal Modeling Methods Including Frequency-Coupling Dynamics of Power Converters" in IEEE Transactions on Power Electronics, Vol. 34, No. 4, pages 3313 to 3328, April 2019, refer to calculational methods for electric systems.

Documents M. Kabalan et al., "Large Signal Lyapunov-Based Stability Studies in Microgrids: A Review" in IEEE Transactions on Smart Grid, Vol. 8, No. 5, pages 2287 to 2295, Sept. 2017, doi: 10.1109/TSG.2016.2521652, and R. Rosso et al., "Grid-Forming Converters: Control Approaches, Grid-Synchronization, and Future Trends - A Review" in IEEE Open Journal of Industry Applications, Vol. 2, pages 93 to 109, 2021, doi: 10.1109/OJIA.2021.3074028, as well as X. Wang et al., "Grid-Synchronization Stability of Converter-Based Resources - An Overview" in IEEE Open Journal of Industry Applications, Vol. 1, pages 115 to 134, 2020, doi: 10.1109/OJIA.2020.3020392, also refer to calculational methods for electric systems.

A problem to be solved is to provide a reliable control method for a power plant.

This object is achieved, inter alia, by a control method, an optimization module, and a computer program, as defined in the independent claims. Exemplary further developments constitute the subject-matter of the dependent claims.

For example, the method uses a digital model of a power plant to simulate an operating condition of the power plant in the field, that is, when the power plant is active and/or operational and not just prior the power plant is installed. If a simulation predicts a critical state that may lead to a shut down of the power plant, by the digital model further simulations are performed and a control parameter set is intended to be obtained by the further simulations to avoid the critical state, and when found the respective control parameter set is applied to the power plant. Thus, the critical state may be avoided. As an example, the power plant is a wind farm, and critical states may build up on a timescale of seconds, for example.

In at least one embodiment, by means of the method a power plant is controlled, the power plant has a control device configured to control an operating state of the power plant, the method comprises:
- monitoring state variables and an actual setting of the control device,
- simulating, by using a digital model of the power plant, an evolution of the operating state using the state variables and the actual setting, and
when a criticality of the operating state is predicted by the simulating:
- creating at least one varied setting of the control device and simulating, by using the digital model, at least one further evolution of the operating state using the at least one varied setting and the actual state variables,
- selecting, by using the digital model, a future setting from the at least one varied setting, with the future setting avoidance of the criticality is predicted, and
- controlling the power plant using the future setting.

Optionally, the method is performed on line. That the method is performed on line may mean, for example, that the method is performed after the power plant has been coupled to a power grid and/or after the power plant became operational. In other words, the method is done at a functional, real power plant.

That is, the method described here is not used during designing the power plat but during operating the power plant. Operating the power plant includes an energization process of the power plant to start providing electric power to the power grid. In other words, the method is used in the field. That is, the method may be an adaptive method that adapts the productive operation of the power plant during the power plant being attached to the power grid.

Especially, the control method may be performed in real time, that is, for example, a time span the method requires to adapt the control parameter set is smaller than a typical time span that criticalities need to develop. For example, said time span is at most 10 min or at most 5 min.

For example, the monitoring the state variables and the actual setting of the control device is done in real time. In this case, real time may mean with a refresh cycle smaller than the typical time span, like at least 0.1 Hz or at least 1 Hz.

For example, the simulating, by using a digital model of the power plant, the evolution of the operating state using the state variables, and the actual setting is continuously performed. This may mean that a time period between two consecutive simulations being started is at most the typical time span. By way of example, the evolution is checked by using each set of state variables received. That is, the simulations may be started or updated with the refresh cycle. However, if no criticality is foreseen, the respective evolution may be categorized as not critical, and no further simulation needs to be done.

However, especially only when a criticality of the operating state is predicted by the simulating, the creating the at least one varied setting of the control device is performed. Then, the full simulating the at least one further evolution of the operating state using the at least one varied setting and the actual state variables is done. It is possible that there is a minimum number of simulations to be done although if a first one of the simulations already avoids the criticality. This may lead to further optimization. For example, said minimum number is three or is five or is ten or is 16.

Then, the selecting the future setting from the at least one varied setting is done wherein in the selected future setting the previously predicted criticality is avoided according to the performed simulations. Subsequently, the power plant is controlled using the obtained future setting. This controlling can be done by the control device, for example, which may directly be addressed by the control method. Thus, the control method may have the authorization to provide the control device with the settings to be applied.

For example, offshore wind farms integration in power networks is a critical step toward energy transition. By doing so, there is an increasing need of power converters and Flexible AC Transmission System, FACTS, devices required to stabilize the network under the variability introduced by the wind farms. In this context, it is of paramount importance to guarantee stable and robust operations of the wind farm under possible variable conditions of the wind farm itself and of the external grid elements, to reduce the risk of resonance within the system and to adapt the control structure of active elements, like FACTS devices, to account for these sources of uncertainty.

In this scenario, it would be unreasonable to assume that a single set of control parameters or a single configuration for a FACTS device permanently applied can improve the inherent stability properties of the system. On the other side, the complexity of the interaction between various assets in the different parts of the spectrum prevents any analytical resolution approach unless one refers to an oversimplified model of the system. Thus, any readjustment of the dynamic properties of a FACTS device, like a STATCOM or an E-STATCOM device, should be based on a solid numeric assessment of the current and achievable stability metrics of the system, as well as of the physical operating limits of the device itself. This can be achieved with the method described herein. STATCOM means Static Synchronous Compensator, and E-STATCOM means Energy Storage STATCOM.

The method described herein provides an adaptive architecture for optimal readjustment of the internal dynamical properties of, for example, a STATCOM or an E-STATCOM device connected to a wind farm based on the combined operations of a local substation monitoring system, like a Supervisory Control and Data Acquisition, SCADA, an optimization architecture, and a digital model of the wind farm.

Even during normal operations of the system, the dynamic stability properties of the wind farm are subjected to an unavoidable variation due to one or more of the following effects:
- Variation in the equivalent impedance profile of the external network,
- variation in the operating point of the wind generators,
- temporary and/or permanent disconnection of some of the physical assets in the plants, like parallel transformers, harmonic filters, shunt reactors, and/or
- natural variation of the internal parameters of the system due to wear-out, aging, climatic events, like temperature changes.

Due to these physical sources of variability, several potentially critical conditions may be experienced in the system: Unstable or poorly damped dynamics, harmonic instabilities, resonance conditions, overvoltage during plant energization, tripping of local protections, and so on. In addition, critical conditions may emerge due to phenomena not correctly modelled during the design phase, like approximations or model uncertainties and/or operating conditions outside the initially expected boundaries. These situations fall as well within the problems to be addressable by the method described herein.

For example, the proposed solution aims at providing a supervisory controller for the local stability properties of a power plant, like a wind farm, capable of preventing the insurgence of critical dynamical conditions in the system through the following logical functions, individually or in any combination, like all together:
1. The supervisory controller acts through simulation and iterative assessment of a digital model of the power plant; this digital model should resemble as much as possible the real condition of the power plant, embedding the status information available in, for example, the SCADA from the physical assets, like out of service, protection status, loading level, and so on.
2. The supervisory controller executes a number of optimization routines such to minimize the mismatch of various performance indexes related to the total power plant with respect to a safety target level defined by the user. The design space of the optimization is constituted by set of control parameters for, for example, the FACTS device installed in the system.
3. The performance indexes subjected to the optimization may be one or more of the following, for example: time-domain behavior of the aggregate plant, linear frequency response of the aggregate plant, eigenvalues, passivity, active/reactive sensitivity of the plant with respect to local frequency/voltage variations.
4. Once the optimal dynamic condition for the system is reached, the supervisory layer communicates the optimized settings of the control parameters to the local FACTS device, so actuate the adaptive configuration.

The controllability of updating the tuned parameters may offer an extra layer of safety when deploying the apparatus to the field. The tuned parameters are updated according to trigger conditions set by a user which include one or more of the following, for example: system condition, update interval, deviation of the performance difference between pre-tuned parameters and tuned parameters.

The supervisory dynamic functionalities can be executed directly as a part of, for example, the SCADA system, or on a separate computational unit, or within the local control system of, for example, the FACTS device.

The supervisory controller operates either in real time in case of unplanned events, or on-demand triggered by expected variations in the plant configurations, like pre-calculating the optimal combination of control parameters for the FACTS device capable of stabilizing the wind park.

Thus, the method described herein makes use, inter alia, of the following aspects, individually or in any combination, like all together:
- Algorithmic design of the energization routine for offshore wind farms, achieved though the combined effect of the following: a local simulator of the dynamics of the FACTS device and nearby portion of the network, an optimal reshaping algorithm for the control parameters of the FACTS device, a distributed controller capable of adjusting the control parameters of the FACTS device during in-field operations.
- Exploitation of combined time-domain and frequency-domain inputs as part of the algorithmic optimization process; this allows to control both the non-linear time-domain transients as well as the inherent stability properties around the portion of the spectrum where the risk of instability is higher.
- Differently from adaptive control schemes possibly embedded inside a local control of a FACTS device, the method described herein aims to protect the exploitation of dynamic optimization routines combined with the substation monitoring/control infrastructures toward the development of advanced dynamic protection schemes for offshore wind farms.

Using the method described herein may inter alia lead to the following exemplary benefits:
- Cost benefit: Reduced size for passive filters related to the high-voltage alternative current, HVAC, connection, thanks to the possibility to optimally design the control system of the STATCOM/E-STATCOM device such to minimizes the risk of resonance in a specific frequency range; enablement of longer connections for the offshore wind farm, with no need of intermediate compensations.
- New function: Enablement of advanced protections schemes against harmonic resonance conditions.
- Improved energization process, depending on the STATCOM/E-STATCOM location.
- Better performances: Mathematically proven possibility to damp critical modes in the windfarm, like direct current oscillations in the offshore wind farm and/or torsional oscillations of the turbines; reduced risk of resonance during normal and abnormal operations; reduced risk of synchronism loss for the wind converters during ride-through events; improved energization process depending on the STATCOM/E-STATCOM location.

According to at least one embodiment, the power plant includes a power generation section. The power generation section comprises a plurality of power sources, like wind-driven generators.

According to at least one embodiment, the power plant includes a point of common coupling, PCC, section. At the PCC section, the power plant is connected to a power grid, also referred to as power network or network.

According to at least one embodiment, the power plant includes a transformer section. For example, the transformer section is electrically between the power generation section and the PCC section.

According to at least one embodiment, the control device is completely or partially installed in or at the PCC section.

According to at least one embodiment, the control device includes a Flexible Alternating Current Transmission System, FACTS, or the control device is a FACTS.

FACTS devices indicate a family of power electronics converters used in the AC transmission systems to control the power flow, support the voltage and contribute to the networks stabilization. For example, STATCOM devices belong to this family. The terms STATCOM also includes advanced STATCOMs with extended energy storage, also called E-STATCOMS or series-compensation devices, for example.

According to at least one embodiment, the power plant is an offshore wind farm, OWF. Alternatively, the power plant may a photovoltaic power farm or a wave farm or a hydro power plant or a geothermal energy plant or the like. Combinations are possible. However, preferably there is a plurality of power generators, like wind turbines.

According to at least one embodiment, the power plant further includes a Supervisory Control and Data Acquisition, SCADA, module. The SCADA module provides one or some or all of the state variables and/or the actual setting used by the digital model. The SCADA module may be complemented by other sensors.

According to at least one embodiment, the method further includes the step of supervising one or some or all power components of the power plant relevant for a power output of the power plant. The power components include, for example, the power generation section and may thus include power sources, like wind turbines. Alternatively or additionally, the power components include the transformer section and/or the PCC section. Further, the power components may include the SCADA module, if present, and the control device, like the FACTS or the STATCOM.

According to at least one embodiment, the method further includes the step of actualizing the digital model upon detecting a change in the power components. For example, if a transformer or a power source is defective, the digital model is updated accordingly to reflect the changed configuration of the power components. Hence, the digital modal can quickly react on changes in the power plant.

The supervising and/or the actualizing can take place continuously, for example, within a periodicity of at most the typical time span, and/or upon a trigger event, like a voltage drop or a phase change exceeding a preset threshold.

According to at least one embodiment, the digital model includes a plurality of controllable parameters reflecting a possible setting of the control device. For example, the controllable parameters on/off values for switches in the power plant. It is also possible that the controllable parameters include values reflecting switching times of components in the power plant or adjustments of electric parameters, like transformer taps.

According to at least one embodiment, the digital model includes a plurality of performance parameters reflecting at least part of the operating state. For example, the performance parameters reflect the time-domain behavior of the aggregate plant, the linear frequency response of the aggregate plant, eigenvalues, the passivity and/or the active/reactive sensitivity of the plant with respect to the local frequency/voltage variations. For example, the digital model has at least 10 or at least 20 or at least 30 eigenvalues; alternatively or additionally, the number of eigenvalues is at most 200 or is at most 100.

According to at least one embodiment, the method further includes:
- providing the digital model with at least one target value,
- adapting at least one of the controllable parameters such that at least one of the performance indicators evolves towards the target value,
- calculating the future setting from the adapting.

Thus, the power plant may be driven towards the target value by using the simulations. The target value or the target values may be provided, for example, manually by a user or automatically by an exterior control instance which may be on the power grid side.

According to at least one embodiment, the method further includes:
- extracting at least one of Eigenvalues or transfer matrix characterizations from the digital model,
- adjusting at least one of the Eigenvalues or the transfer matrix characterizations to reach a set damping target level and/or to minimize a resonance condition in a set frequency range.

According to at least one embodiment, the method further includes the step of assessing, by using the digital module, an energization routine during energization of the power plant. Thus, the energization routine may be optimized by using the digital model to avoid interruptions of the energization routine or a shutdown of the power plant during the energization routine.

According to at least one embodiment, the energization routine comprises a plurality of energization stages. The energization stages may follow one another in time. That is, in the latter case the energization stages are not performed simultaneously.

According to at least one embodiment, the creating and the selecting is performed before each energization stage is started such that an expected transient of the operating state during the energization stages is optimized. Hence, the individual energization stages may be performed only after checking the evolution of the power plant by simulating the power plant with the digital model. It is possible that for each energization stage an own set of simulations is performed so that the energization stages may individually be optimized and may be performed with an individual setting of the control device.

According to at least one embodiment, the monitoring is done with a frequency of at least 0.11 Hz or of at least 1 Hz or of at least 10 Hz. Alternatively or additionally, said frequency is at most 1 kHz or is at most 200 Hz or is at most 100 Hz. For example, the monitoring is done with a frequency of 50 Hz. This may mean that the SCADA provides the state variables with the stated frequency.

According to at least one embodiment, a time span between the monitoring and the controlling, based on the respective monitoring, is at most 10 min or is at most 5 min or is at most 2 min or is at most 1 min or is at most 20 s. For example, said time span is by at least a factor of two or by at least a factor of five smaller than smaller than the typical time span that criticalities need to develop.

A dynamic optimization module is additionally provided. By means of the dynamic optimization module, a method as indicated in connection with at least one of the above-stated embodiments is performed. Features of the dynamic optimization module are therefore also disclosed for the method and vice versa. For example, the dynamic optimization module includes a processor and a memory and input/output lines to receive the state variables and an actual setting as well as the future setting, respectively. Thus, the dynamic optimization module comprising means for carrying out the method as stated above.

A power plant is additionally provided. The power plant is operated by a method as indicated in connection with at least one of the above-stated embodiments. Features of the power plant are therefore also disclosed for the method and vice versa.

In at least one embodiment, the power plant comprises a plurality of power sources and a control device as well as a dynamic optimization module. The control device is configured to be controlled by the dynamic optimization module.

Moreover, a computer program and a computer-readable storage medium comprising instructions which, when executed by a computer, cause the computer to carry out the method as indicated in connection with at least one of the above-stated embodiments is provided.

A semiconductor device, a power semiconductor module and a method described herein are explained in greater detail below by way of exemplary embodiments with reference to the drawings. Elements which are the same in the individual figures are indicated with the same reference numerals. The relationships between the elements are not shown to scale, however, but rather individual elements may be shown exaggeratedly large to assist in understanding.

In the figures:
- Figure 1: is a schematic block diagram of an an exemplary embodiment of a control method described herein,
- Figure 2: is a schematic view of an exemplary embodiment of a power plant for a control method described herein,
- Figure 3: is a schematic block diagram of an exemplary embodiment of a dynamic optimization module for a power plant described herein,
- Figures 4 to 8: are schematic representations of method steps of an exemplary embodiments of control methods described herein, and
- Figures 9 to 11: are schematic time-domain diagrams showing a behavior of a power plant without and with optimized control according to an exemplary embodiment of a control method described herein.

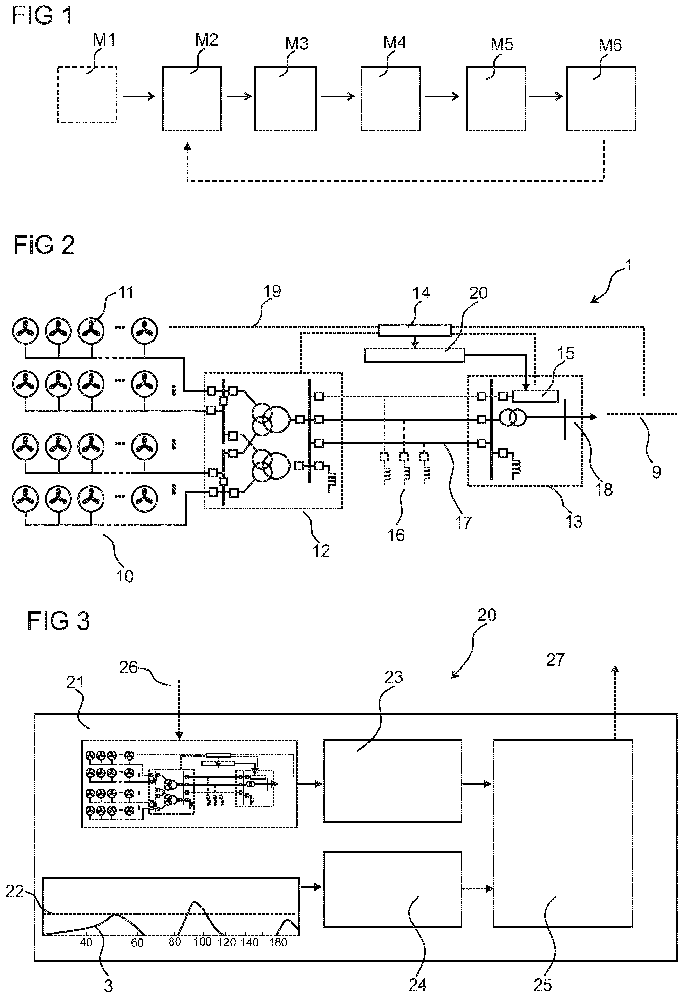

Figures 1 illustrates an exemplary embodiment of a control method. An exemplary power plant 1 for the control method is shown in Figure 2.

The control method comprises a method step M1. In this optional method step, a power plant 1 comprising a control device 15 to be controlled with the method is provided and is made operational, that is, ready for use. The power plant 1 comprises a control device 15, like a FACTS. For example, due to optional method step M1 the method may be performed on line on an operational power plant 1.

Method step M2 comprises monitoring the dynamic state representation 3 which is, for example, a single state variable, a state-space and/or a transfer matrix representations and an actual setting of the control device 15. This is done, for example, by receiving and/or reading, by a dynamic optimization module 20, the dynamic state representation 3 from a SCADA module 14. The actual setting of the control device 15 may be received and/or read by the dynamic optimization module 20 either directly from the control device 15 or indirectly from the SCADA module 14, for example.

Method step M3 comprises simulating, by using a digital model 21 of the power plant 1, an evolution of the plant operating condition using the dynamic state representation 3 and the actual settings for at least one of the controllable devices. In other words, the expected behavior of the power plant 1 is assessed by means of simulation. The digital model 21 reflects the power plant 1 and is a mapping of the real-life power plant 1 to a virtual construct.

When a criticality of the operating state is predicted by the simulating, then method step M4 is done and said method step M4 comprises creating at least one varied setting of the control device 15 and simulating, by using the digital model 21, at least one further evolution of the operating condition using the at least one varied setting and the dynamic state representation 3. Especially, a plurality of different varied settings is used for different simulations so that indeed there is a plurality of possibly different simulation results based on a plurality of different varied settings. The different varied settings may be in a one-to-one correspondence with the different simulation results. The method step M4 may be done by the dynamic optimization module 20.

When no criticality of the operating state is predicted, then method step M3 may continuously be repeated. It is also possible that method step M3 runs in parallel with method step M4, that is, the dynamic state representation 3 may continuously be monitored by the dynamic optimization module 20, and the method step M4 may be adapted to the more recent state representation 3 or may be skipped if occurrence of a criticality is no longer predicted. In case that not criticality is apparent or that there are no signs or indications for a nearby criticality, the method step M3 may optionally be simplified or shortened.

Subsequent method step M5 comprises selecting, by using the digital model 21, a future setting from the at least one varied setting, with the future setting avoidance or delay or abatement of the criticality is predicted. The selected varied setting may be the best setting resulting from the simulations, that is, the most stable solution and/or the most cost-efficient solution and/or the most energy-efficient solution, for example. Said target may be defined by a user or may be defined by the power grid, either dynamically or statically. The method step M5 may also be done by the dynamic optimization module 20.

Then, method step M6 comprises controlling the power plant 1 using the future setting. The method step M6 may be done by the dynamic optimization module 20, too.

The method is thus performed on the operational power plant 1 that is in principle connected to a power grid and that is no longer under construction or under design. Thus, the method steps M2 to M6 are performed on line, that is, in the field when the power plant 1 is actually used.

As stated above, the method steps M2 and M3 may continuously or virtually continuously be performed while the method steps M4 to M6 may be performed only when needed. The stated method steps M2 to M6 may be done in a cyclic manner many times as long as the power plant 1 is on line as indicated in Figure 1 by a dashed arrow. However, the method steps M2 and M3 may run in parallel to the method steps M4 to M6 so that a continuous surveillance of the power plant 1 by method steps M2 and M3 is enabled.

In Figure 2, the exemplarily power plant 1 is illustrated in more detail. The power plant 1 has a power generation section 10. The power generation section 10 comprises a plurality of power sources 11, like wind turbines. The power sources 11 may be provided in a plurality of strings. Further, the power plant 1 has a transformer section 12 to which the power generation section 10 is connected. For example, each string of the power sources 11 is an input line of the transformer section 12. The transformer section 12 can comprise one or more transformers as well as one or more shunts.

The transformer section 12 is followed by an alternating current, AC, line 17, For example, the AC line 17 has three phases. Optionally, the AC line 17 comprises a mid-point compensation 16. For each phase, there could be one mid-point compensation 16.

The AC line 17 leads to a point of common coupling, PPC, section 13. The PCC section 13 comprises a PCC 18 to a power network 9. In the PCC section 13, the control device 15, like a FACTS, especially a STATCOM, is located.

Moreover, the power plant 1 comprises a SCADA module 14 for supervision of the power plant 1. The components of the power plant 1 are connected to the SCADA module 14 by means of data lines 19. Further, the power plant 1 has the dynamic optimization module 20 which may directly be connected both to the SCADA module 14 and the control device 15. For example, the SCADA module 14 sends the data input 26 in intervals of 20 ms or of 50 ms to the dynamic optimization module 20. The dynamic optimization module 20 may output control signals directly to the control device 15 or indirectly to the control device 15 via the SCADA module 14 with a same rate or slower. Especially, the control signals to the control device 15 are sent with intervals smaller than a typical time span that criticalities need to develop in the power plant 1.

It is possible that the SCADA module 14 and/or the dynamic optimization module 20 are placed remotely so that remote surveillance and/or control of the power plant 1 may be enabled. For example, the sections 11, 12 are off-shore while the modules 14, 20 and possibly the PCC section 13 are onshore wherein the SCADA module 14 and/or the dynamic optimization module 20 can be placed close to or remote from the PCC section 13.

Figure 3 illustrates a more detailed configuration of an exemplary dynamic optimization module 20. The dynamic optimization module 20 comprises a data input 26 from the SCADA module 14 and the control device 15, for example. Further, there is a digital model 21 of the power plant 1. The digital model 21 uses the data from the SCADA module 14 and/or the control device 15.

The digital model 21 feeds an identification submodule 23. The identification submodule 23 performs an identification of critical stability indices like a frequency scan on the digital model 1 or like eigenvalues extracted from the digital model 21.

The dynamic optimization module 20 is optionally provided with a target value/limit 22, like a target resonance level, shown as a dotted line. The target value/limit 22 is compared with a state variable 3 wherein the state variable 3 may be monitored time-dependent so that not only an actual value of the state variable 3 may be considered but also a history of the state variable 3. It is possible that there are a plurality of state variables 3 and a plurality of target values/limits 22.

The comparison and/or analysis of the at least one target value/limit 22 and the at least one state variable 3 is fed into an optional definition submodule 24. The definition submodule 24 provides a definition of minimum robustness levels on the power plant 1.

Outputs of the identification submodule 23 and/or of the definition submodule 24 are fed into an optimization submodule 25. The definition submodule 25 performs optimization routines and dynamic adjustments of the control device 15 like a STATCOM. Tuned settings for the control device 15 are provided via a data output 27. The data output 27 and/or the data input 26 may be wireless connections or may also be wire-based.

In the following, examples of technical characteristics of the digital model 21 are explained. In this example, minimum viable characteristics of the digital model 21 and the optimization approach are as follows, individually or in any combination, like all together:
- The digital model 21 should be able to correctly grasp the dynamical characteristics of the real system 1 and express them in state-space form, like a frequency-domain characterization, or through time-domain profiles associated to the various possible transients affecting the system 1, or through alternative mathematical metrics connected to the stability of the set-up.
- The digital model 21 should be capable of providing to the optimization architecture a number of metrics, like transfer matrix profiles, passivity curves, eigenvalues and/or time-domain trajectories, which help to correlate the possible operating conditions of the system to the inherent stability properties of the real power plant 1.
- The digital model 21 should be capable of adapting its output metrics to the actual operating conditions of the power plant 1, like measurement and operating conditions derived from the SCADA module 14, as well as to the potential changes in some of the tunable parameters in the system, like changes in the control parameter of the control device 15, like a FACTS device. In this way, the digital model 21 can grasp the core dynamical characteristics of the current/potential future power plant configurations.
- Example of state-space models for various converter topologies are provided in D. Yang et al., "Unified Modular State-Space Modeling of Grid-Connected Voltage-Source Converters" or Y. Wang et al., "Harmonic Instability Assessment Using State-Space Modeling and Participation Analysis in Inverter-Fed Power Systems" as cited above; examples of stability indexes and methodologies for different types of modeling formats are provided in X. Yue et al., "Review of Small-Signal Modeling Methods Including Frequency-Coupling Dynamics of Power Converters" or in M. Kabalan et al., "Large Signal Lyapunov-Based Stability Studies in Microgrids: A Review" as cited above; the disclosure content of these documents is incorporated by reference.
- Among others, examples of tunable parameters in the set-up could be the following: connection/disconnection states of passive elements in the network like filters or reactors, control parameters of the converter devices, like parameters of virtual impedance/admittance, parameters of the synchronization loops, parameters of active/reactive power regulations, parameters of voltage/frequency regulations, parameters of active damping schemes and/or parameters for voltage ride through schemes, see also R. Rosso et al., "Grid-Forming Converters: Control Approaches, Grid-Synchronization, and Future Trends-A Review" or X. Wang et al., "Grid-Synchronization Stability of Converter-Based Resources-An Overview" as cited above; the disclosure content of these documents is incorporated by reference, too.
- The digital dynamic model 21 should have a pre-defined consistency range, like 5% to 10% maximum mismatch compared to the real system, within the part of the frequency spectrum of interest, like from low frequency up to 5 kHz.
- The optimization model should be able to modify and/or reshape the simulated stability metrics of the digital model 21 by acting on the tunable parameters, with the objective to achieve specific target levels for the stability metrics, like minimum damping for selected eigenvalues or maximum resonance in the frequency response of specific parts of the power plant 1. The numeric values for target metrics to be reached in each operating condition are defined case-by-case during the engineering process, accounting for the specific characteristics of each set-up, for example.
- Once the optimization algorithm reaches satisfactory levels for the stability metrics derived out of the digital model 21, then the identified set of tunable parameters is also modified in the real system through the SCADA interface, for example.
- Several general-purpose coding languages like MATLAB, Python, Modelica, C, or domain-specific ones like PowerFactory, PSCAD, PLECS, can be deployed to generate and/or implement these digital models 21. Several general-purpose packages and algorithms can be deployed to run the optimization.

Otherwise, the same as to Figures 1 and 2 may also apply to Figure 3, and vice versa.

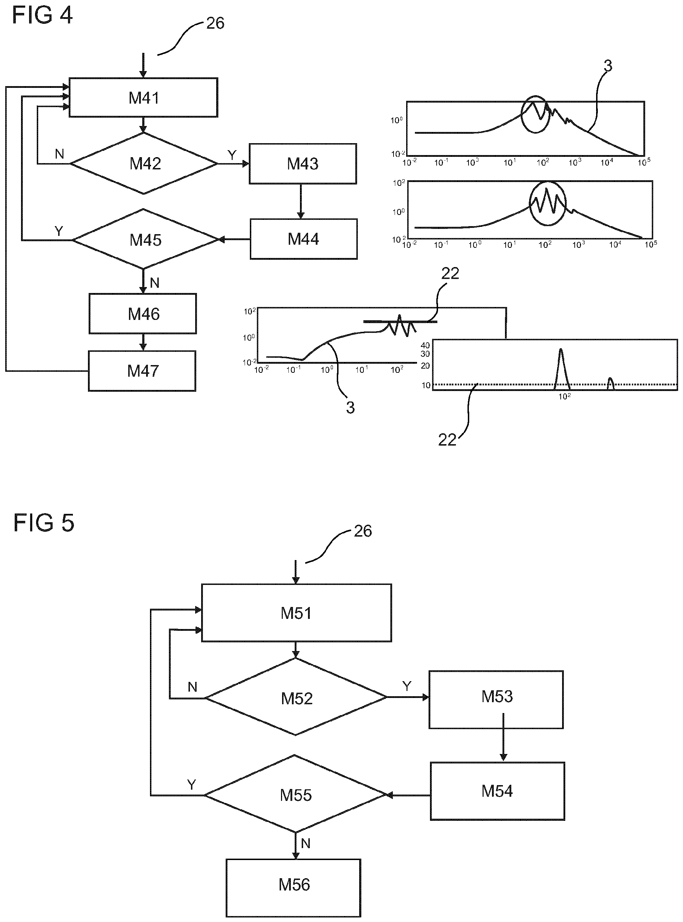

Figure 4 illustrates an exemplary use case of the control method. In this use case, an extra harmonic damping is provided after local faults in the system.

Consider an offshore wind farm, OWF, equipped with a FACTS device 15. Due to normal reconfigurations inside a substation or due to an abnormal event, like a fault in one of the substation elements, followed by intervention of local protection, the overall dynamic stability properties of the OWF may undergo significant changes. The post-event status of the substation may be characterized by an increased risk of resonance, and thus higher risk of tripping off the full wind farm.

The method of Figure 4 comprises the following steps wherein the order of the steps is indicated by arrows, and case differentiation is indicated by Yes, Y, or No, N, labels:
M41: Assessing a current layout of the power plant 1, wherein local information from the SCADA module 14 is obtained. Thus, the state variables 3 and an actual setting of the FACTS device 15 is provide, for example, by receiving data from the SCADA module 14.

M42: Is a change detected in the layout of the power plant 1?

M43: If a change is detected, adjusting the digital model 21 to the novel system layout.

For example, there is a fault in a resonant filter and subsequent disconnection of a local protection. So, what happens in the power plant 1? This is illustrated by the behavior of an open loop from V_{PCC} to I_{PCC} wherein a magnitude is shown over time as an example. It can be seen that there are disturbances than can develop into a more serious condition.

M44: Extracting stability metrics from the digital model 21.

M45: Do stability metrics meet minimum target limits? If yes, the method continues with methos step M41. If no, the method continues with method step M46.

M46: Adapting tuning of the FACTS device 15 to modified conditions. As illustrated, a target value/limit 22 is checked against the temporal evolution of the at least one relevant state variable 3 and it is noted in this example, that the target value/limit 22 is exceeded. Then by parameter variation an improved setting with a more favorite temporal evolution is searched for and chosen.

M47: Modifying the in-field conditions in the power plant 1, that is, for example, the setting of the FACTS device 15.

Thus, Figure 4 illustrates an exemplary, conceptual method scheme for damping of local resonance phenomena associated to the disconnection of a local high-frequency filter in the substation, and adaptive re-design of the FACST control system by the supervisory architecture, to reduce the risk of resonance with the external network 9.

Hence, the control method can be used to achieve advanced robustness in case of, for example, a local fault in the high-frequency filter typically existing in the power plant 1. Once the topology change is detected, the digital model 21 within the dynamic optimizer 20 is called to extract the pre- and/or post-fault stability indexes associated to the power plant 1. In case the post-fault characterization exceeds the predefined dynamic safety limit 22, an optimization routine is triggered inside the dynamic optimizer 20. Upon success of the optimization routine, the updated settings of the control parameters are updated in the real-time control of the FACTS device 15.

The assessment of each of the potential events experienced in the system and associated rules for dynamic adjustment can be mapped and/or implemented in soft-real time, for example, once the corresponding topology change is detected by the SCADA module 14 or may be pre-calculated, for example, identifying the most relevant changes is the topology, for improved execution speed.

Otherwise, the same as to Figures 1 to 3 may also apply to Figure 4, and vice versa.

In Figure 5, another example of the control method is illustrated. In this example, specific eigenvalues are stabilized through adaptive FACTS control design.

Consider the case where specific dynamics in the system are characterized by low robustness levels and may thus generate instabilities within the power plant 1. The control method described herein can be exploited to improve the overall stability performances of the power plant 1 according to the process illustrated in Figure 5. In the context of the OWF application case, this approach can be utilized to improve the damping of specific dynamics inside the OWFs, like direct current, DC, regulation inside the wind turbines 11, through an optimal dynamic adjustment of the FACTS device 15.

From a theoretical perspective, the mathematical model of the system is fully equivalent to the one used in connection with Figure 4. Still, the dynamic optimizer included in the architecture is capable of extracting specific eigenvalues from the digital model 21 of the OWF 1. For example, the number of eigenvalues is at least 20 and at most 50 to enable real-time analysis wherein real-time refers to the time scale of the typical time span that criticalities need to develop, like at most 5 min.

The method of Figure 5 comprises thus the following steps wherein again the order of the steps is indicated by arrows, and case differentiation is indicated by Yes, Y, or No, N, labels:
M51: Assessing a current layout of the power plant 1, wherein local information from the SCADA module 14 is obtained. Thus, the state variables 3 and an actual setting of the FACTS device 15 is provide, for example, by receiving data from the SCADA module 14.

M52: Is there a critical stability condition for an asset other than the FACTS device 15? If no, the method continues with method step M51. If yes, then method step M53 follows.

M53: Extracting the eigenvalues from the digital model 21.

M54: Adjusting parameters of the FACTS device 15.

M55: Do the eigenvalues meet the minimum target values? If yes, then method step M51 follows. If no, the method continues with method step M56.

M56: Triggering OWF topology changes. This is done, for example, by adjusting the setting of the FACTS device 15.

Otherwise, the same as to Figure 4 may also apply to Figure 5, and vice versa.

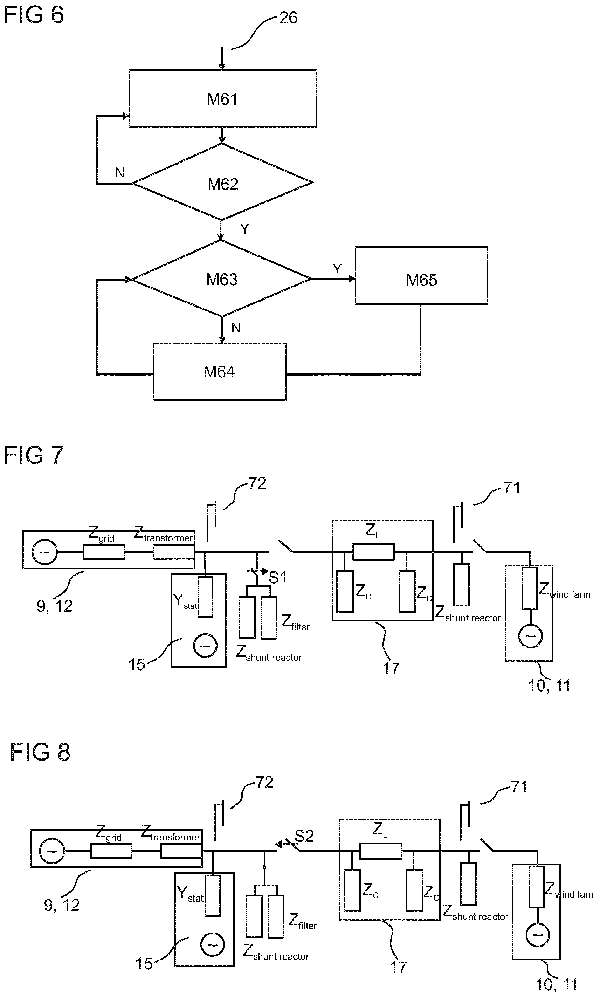

In the example of Figure 6, the control method is used for system energization. Energization phases of, for example, the OWF 1 may create undesired tripping of some of the assets within the power plant 1 due to potential overvoltage transients and related interventions of the protection devices.

The core idea of this use case it to combine a multi-step energization routine, that is, a routine where the different parts of the plant are energized according to a pre-defined order selected during the engineering phase, with an improved or optimal definition of the control parameters actuated by the dynamic optimizer 20 of the OWF 1. This adaptation process may be pre-calculated, that is, off line, or may be executed directly within the supervisory control of the substation.

The general scheme can be represented as below wherein again the order of the steps is indicated by arrows, and case differentiation is indicated by Yes, Y, or No, N, labels:
M61: Assessing a current layout of the power plant 1, wherein local information from the SCADA module 14 is obtained. Thus, the state variables 3 and an actual setting of the FACTS device 15 is provide, for example, by receiving data from the SCADA module 14.

M62: Is an energization routine triggered? If no, the method continues with method step M61: otherwise, method step M63 follows.

M63: Assessing a first phase of the energization routine: Is there any risk for tripping? If so, method step M65 follows, otherwise the method continues with step M64.

M64: Executing the first phase of the energization routine. If performed directly after method step M63, this is done without any changes of the setting of the FACTS device 15.

M65: Adjusting parameters to match the requirements of the first phase of the energization routine. This is done, for example, by repeated simulations of the evolution of the power plant 1 using different settings, and the most appropriate setting it then used to carry out subsequent method step M64.

The method steps M63 to M65 are iteratively repeated for each phase of the energization routine. For example, there are at least two or at least three and/or at most ten or at most five of such phases.

Hence, by using the control method described herein, each phase of the energization routine can be performed with its own setting of the FACTS device 15. Thus, there can be different settings for the different phases of the energization routine.

This is illustrated in more detail in connection with Figures 7 and 8 that show a conceptual scheme for the improved multi-step energization procedure combined with the dynamic optimization routine. All the elements shown in Figures 7 and 8 are typically available in most of the OWF installations connected through an AC transmission line 17.

The system of Figures 7 and 8 comprises the transformer section 12 next to the power network 9, the control device 15, like a STATCOM, the AC line 17 and the power generation section 10 having the power source 11, like wind turbines.

The legend for Figures 7 and 8 is as follows:
- The source on the very left represents an equivalent model of the external network 9, together with its equivalent impedance z_{grid};
- z_{transformer} is the equivalent impedance of the transformer in the transformer section 12;
- z_{wind farm} is the equivalent impedance of the power generation section 10;
- z_{C} is the equivalent impedance modeling the natural capacitive behavior of the cable transmission line 17; it appears twice, as the so-called 'pi-model' of the line 17 has been adopted which is well known in the electrical engineering field;
- z_{L} is the equivalent impedance modeling the natural inductive behavior of the cable transmission line 17;
- zₛₕᵤₙₜ reactor: Shunt reactors are physical inductors often installed at the two sides, sometimes also in the middle, of the line 17 to partially compensate for the natural capacitive behavior of the cable transmission line 17;
- z_{filter}: A passive filter is used for the damping of specific harmonic components;
- the source at the middle of the drawing is an equivalent dynamical model of the STATCOM 15, together with its equivalent admittance Yₛₜₐₜ wherein stat stands for STATCOM.

Further, there is a first switch S1 towards the equivalent dynamical model of the STATCOM 15 and between the STATCOM 15 and the AC line 17, and there is a second switch 52 between the AC line 17 and the equivalent dynamical model of the STATCOM 15. There can be a further switch next to the power generation section 10. Moreover, there is an offshore voltage observation point 71 next to the power generation section 10 and an onshore voltage observation point 72 next to the STATCOM 15.

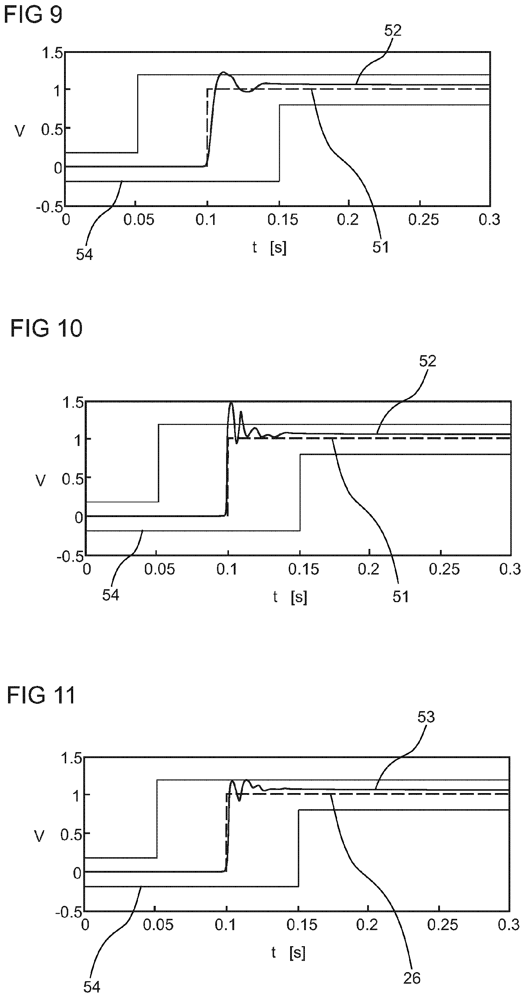

In a first step, see Figure 7, the shunt reactor and the high-frequency filter are energized. As can be seen in Figure 9 showing a voltage over time, the predicted non-optimized power output 52 is well within a tolerated parameter range 54 and close to a desired output 51 shown as a dashed line. Thus, this first phase of the energization routine does not need to be modified and the method step M64 can directly follow the method step M63.

In a second step, see Figure 8, energization of the AC line 17 takes place which can be a line for up to MV for wind farm distribution strings. As can be seen in Figure 10, in the method step M63 it is foreseen that with the actual setting of the STATCOM 15 the tolerated parameter range 54 will significantly be left and the non-optimized power output 52 deviates significantly from the desired output 51.

Thus, the method step M65 is performed, and in course of this method step M65 an optimized power output 53 is achieved with a new setting so that the evolution is kept within the tolerated parameter range 54, see Figure 11.

Otherwise, the same as to Figures 4 and 5 may also apply to Figures 6 to 11, and vice versa.

Although the examples above represent just a subset of the potential advanced protection functionalities implementable with the proposed control method, still they provide an overview of the core functionalities that can be associated to such an architecture. Alternative adaptation schemes can also be applied.

The invention described here is not restricted by the description on the basis of the exemplary embodiments. Rather, the invention encompasses any new feature and also any combination of features, which includes in particular any combination of features in the patent claims, even if this feature or this combination itself is not explicitly specified in the patent claims or exemplary embodiments.

### List of Reference Signs

- 1: power plant
- 10: power generation section
- 11: power source
- 12: transformer section
- 13: PCC section
- 14: SCADA module
- 15: control device (FACTS, e. g. STATCOM)
- 16: mid-point compensation
- 17: AC line
- 18: PCC
- 19: data line
- 20: dynamic optimization module
- 21: digital model
- 22: target value/limit
- 23: identification submodule
- 24: definition submodule
- 25: optimization submodule
- 26: data input
- 27: data output
- 3: dynamic state representation
- 51: desired output
- 52: non-optimized power output
- 53: optimized power output
- 54: tolerated parameter range
- 71: offshore voltage observation point
- 72: onshore voltage observation point
- 9: power network
- M: method step
- N: no
- S1: first switch
- S2: second switch
- t: time
- V: voltage
- Y: yes

## Claims

1. A method by means of which a power plant (1) is controlled, the power plant (1) has a control device (15) configured to control an operating state of the power plant (1), the method is performed on line and comprises:
- monitoring a dynamic state representation (3) and an actual setting of the control device (15),
- simulating, by using a digital model (21) of the power plant (1), an evolution of the operating state using the dynamic state representation (3) and the actual setting, and when a criticality of the operating state is predicted by the simulating:
- creating at least one varied setting of the control device (15) and simulating, by using the digital model (21), at least one further evolution of the operating state using the at least one varied setting and corresponding dynamic state representation (3),
- selecting, by using the digital model (21), a future setting from the at least one varied setting, with the future setting avoidance of the criticality is predicted, and
- controlling the power plant (1) using the future setting.

2. The method according to the preceding claim,
wherein the power plant (1) includes a power generation section (10) comprising a plurality of power sources (11), a point of common coupling, PCC, section (13), and a transformer section (12) electrically between the power generation section (10) and the PCC section (13),
wherein the control device (15) is installed in the PCC section (13).

3. The method according to any one of the preceding claims, wherein the control device (15) includes a Flexible Alternating Current Transmission System, FACTS, or the control device (15) is a FACTS.

4. The method according to any one of the preceding claims, wherein the power plant (1) is an offshore wind farm, OWF.

5. The method according to any one of the preceding claims, wherein the power plant (1) further includes a Supervisory Control and Data Acquisition, SCADA, module (14),
wherein the SCADA module (14) provides at least one of state variables required for the dynamic state representation (3) or the actual setting used by the digital model (21) or a data input (26) required to configure the digital model (21).

6. The method according to any one of the preceding claims, wherein the method further includes:
- supervising power components (10, 11, 12, 13, 15) of the power plant (1) relevant for a power output of the power plant (1), and
- actualizing the digital model (21) upon detecting a change in the power components (10, 11, 12, 13, 15).

7. The method according to any one of the preceding claims, wherein the digital model (21) includes a plurality of controllable parameters reflecting a possible setting of the control device (15) and a plurality of performance parameters reflecting at least part of the operating state,
wherein the method further includes:
- providing the digital model (21) with a target value,
- adapting at least one of the controllable parameters such that at least one of the performance indicators evolves towards the target value,
- calculating the future setting from the adapting.

8. The method according to any one of the preceding claims, wherein the method further includes:
- extracting at least one of Eigenvalues or transfer matrix characterizations from the digital model (21),
- adjusting at least one of the Eigenvalues or the transfer matrix characterizations to reach a set damping target level and/or to minimize a resonance condition in a set frequency range.

9. The method according to any one of the preceding claims, wherein the method further includes:
- assessing, by using the digital module, an energization routine during energization of the power plant (1).

10. The method according to the preceding claim,
wherein the energization routine comprises a plurality of energization stages,
wherein the simulating, the creating and the selecting is performed before each energization stage is started such that an expected transient of the operating state during the energization stages is optimized.

11. The method according to any one of the preceding claims, wherein the monitoring is done with a frequency of at least 1 Hz.

12. The method according to any one of the preceding claims, wherein a time span between the monitoring and the controlling, based on the respective monitoring, is at most 5 min.

13. A dynamic optimization module (20) comprising means for carrying out the method of any one of the preceding claims.

14. A power plant (1) comprising a plurality of power sources (11) and a control device (15) as well as a dynamic optimization module (20) according to the preceding claim, wherein the control device (15) is configured to be controlled by the dynamic optimization module (20).

15. A computer program comprising instructions which, when the computer program is executed by a computer, cause the computer to carry out the method of any one of claims 1 to 13.
